# EUROPÄISCHE PATENTANMELDUNG

(11) **EP 4 124 418 A1**
(43) Veröffentlichungstag der Anmeldung: **01.02.2023**
(21) Anmeldenummer: 22184883.1
(22) Anmeldetag: 14.07.2022
(51) Int. Cl.: B25J 15/00, B25J 19/00

(54) **GREIFEREINRICHTUNG**

(30) Priorität: 29.07.2021 DE 102021119687
(71) Anmelder: J. Schmalz GmbH, 72293 Glatten (DE)
(72) Erfinder: Sipple, Jeremia, 72293 Glatten (DE); Frey, Matthias, 72172 Sulz-Dürrenmettstetten (DE); Eder, Matthias, 78727 Oberndorf (DE)
(74) Vertreter: DREISS Patentanwälte PartG mbB

(57) **Zusammenfassung**

Die Erfindung betrifft eine Greifereinrichtung (10) zum Greifen eines Gegenstandes, umfassend wenigstens einen Greiferarm (12-1,12-2,12-3,12-4) mit wenigstens einem Greifendeffektor (24), wobei der wenigstens eine Greiferarm (12-1,12-2,12-3,12-4) über ein Schwenkgelenk (14-1,14-2,14-3,14-4) um eine Schwenkachse (16-1,16-2,16-3,16-4) schwenkbar an der Greifereinrichtung gelagert ist, eine Antriebseinrichtung (36) zum Antreiben einer Schwenkbewegung des wenigstens einen Greiferarms um die Schwenkachse, wobei dem wenigstens einen Greiferarm eine Kopplungseinrichtung (34) zugeordnet ist, welche dazu ausgebildet ist, den Greiferarm wahlweise mit der Antriebseinrichtung zu koppeln oder von der Antriebseinrichtung zu entkoppeln.

## Beschreibung

Die Erfindung betrifft eine Greifereinrichtung gemäß dem Oberbegriff des Anspruchs 1.

Solche Greifereinrichtungen dienen zum Greifen von Gegenständen, z.B. in größeren Handhabungsanlagen. Um Gegenstände mit unterschiedlicher Form und Größe zuverlässig greifen zu können, ist es wünschenswert, die Greifereinrichtung, insbesondere eine Position der Greifendeffektoren (z.B. Sauggreifer), flexibel anpassen zu können.

Zu diesem Zweck sind Greifereinrichtung bekannt, bei denen Position und/oder Anzahl der Greifendeffektoren manuell veränderbar ist. Bei solchen Greifereinrichtung findet dann üblicherweise vor dem eigentlichen Handhabungsprozess ein manueller Einrichtprozess statt, um die Greifereinrichtung bspw. an veränderte Greifanforderungen anzupassen. Dies führt regelmäßig dazu, dass die Greifeinrichtung für unerwünscht lange Zeitdauern nicht bestimmungsgemäß verwendet werden kann.

Aus der US 10 926 403 B1 ist eine Greifereinrichtung mit einer Mehrzahl von Greiferarmen bekannt, bei der die Greiferarme über jeweilige Antriebseinrichtungen relativ zueinander verschwenkbar sind und somit ein Abstand der Greifendeffektoren zueinander bedarfsgerecht verkleinerbar oder vergrößerbar ist.

Die Erfindung beschäftigt sich mit der Aufgabe, Gegenstände mit unterschiedlichen Formen und Größenverhältnissen zuverlässig mit einer Greifereinrichtung greifen zu können. Gleichzeitig ist eine konstruktiv einfache und platzsparende Bauweise der Greifereinrichtung wünschenswert.

Diese Aufgabe wird durch eine Greifereinrichtung mit den Merkmalen des Anspruchs 1 gelöst.

Die Greifereinrichtung umfasst wenigstens einen Greiferarm, an welchem wenigstens ein Greifendeffektor angeordnet ist. Beispielsweise kann es sich bei dem Greifendeffektor um einen Sauggreifer handeln. Der Greiferarm selbst ist insofern z.B. eine Art langgestrecktes Gerüstteil. Der wenigstens eine Greiferarm kann im einfachsten Fall z.B. von einem Profilteil (z.B. Strangpressprofil) gebildet sein, was eine stabile und leichte Bauweise ermöglicht.

Der wenigstens eine Greiferarm ist über ein Schwenkgelenk um eine Schwenkachse schwenkbar an der Greifereinrichtung gehaltert, insbesondere gelagert. Der wenigstens eine Greiferarm kann mit einem weiteren Greiferarm über das Schwenkgelenk schwenkbar verbunden ist. Es ist auch denkbar, dass die Greifereinrichtung einen Greifergrundkörper umfasst und der wenigstens eine Greiferarm mit dem Greifergrundkörper über das Schwenkgelenk schwenkbar verbunden ist.

Die Greifereinrichtung umfasst außerdem eine Antriebseinrichtung, insbesondere umfassend wenigstens einen Antriebsmotor, zum Antreiben einer Schwenkbewegung des wenigstens einen Greiferarms um die Schwenkachse. Insofern ist die Antriebseinrichtung insbesondere dazu ausgebildet, den wenigstens einen Greiferarm um seine Schwenkachse zu verschwenken.

Dem wenigstens einen Greiferarm ist eine Kopplungseinrichtung zugeordnet, welche dazu ausgebildet ist, den Greiferarm wahlweise mit der Antriebseinrichtung zu koppeln oder von der Antriebseinrichtung zu entkoppeln. Insofern umfasst die Greifereinrichtung wenigstens eine Kopplungseinrichtung zum wahlweisen Koppeln oder Entkoppeln des ihr zugeordneten Greiferarms und der Antriebseinrichtung. Die Kopplungseinrichtung kann insbesondere derart ausgebildet sein, dass im gekoppelten Zustand eine Schwenkbewegung des Greiferarms durch die Antriebseinrichtung antreibbar ist, während im entkoppelten Zustand eine Schwenkbewegung des Greiferarms von der Antriebseinrichtung nicht antreibbar ist.

Durch Betätigen der Kopplungseinrichtung kann insofern ausgewählt werden, ob der wenigstens eine Greiferarm von der Antriebseinrichtung um die Schwenkachse verschwenkt wird oder nicht. Dies ermöglicht es, eine Schwenklage des wenigstens einen Greiferarms bedarfsgerecht zu verändern und somit eine Position eines an dem Greiferarm angeordneten Greifendeffektors flexibel anzupassen, bspw. in Abhängigkeit einer Geometrie eines zu greifenden Gegenstands. Dadurch, dass der wenigstens eine Greiferarm von der Antriebseinrichtung abkoppelbar ist, ist es insbesondere möglich, die Antriebseinrichtung für weitere Verwendungszwecke innerhalb der Greifereinrichtung einzusetzen, ohne dass der wenigstens eine Greiferarms dabei zwangsläufig mit verschwenkt wird. Beispielsweise ist es denkbar, dass die Antriebseinrichtung zusätzlich dazu verwendet wird, weitere Baugruppen des Greifereinrichtung, bspw. weitere Arme oder Stellglieder, anzutreiben. Eine solche Greifereinrichtung kann daher kosteneffizient und zudem besonders kompakt aufgebaut sein.

Vorzugsweise umfasst die Greifereinrichtung eine Mehrzahl von Greiferarmen, welche jeweils über ein Schwenkgelenk um eine jeweilige Schwenkachse schwenkbar an der Greifereinrichtung gelagert, insbesondere gehaltert, sind. Insbesondere ist jeder der Greiferarme mit Greifendeffektoren ausgestattet, wie vorstehend beschrieben. Dann kann die Antriebseinrichtung insbesondere dazu ausgebildet sein, eine Schwenkbewegung eines jeweiligen Greiferarms um dessen Schwenkachse anzutreiben. Den Greiferarmen ist dann vorzugsweise jeweils eine eigene Kopplungseinrichtung zugeordnet, welche dazu ausgebildet ist, den ihr zugeordneten Greiferarm wahlweise mit der Antriebseinrichtung zu koppeln oder von der Antriebseinrichtung zu entkoppeln. Dies bedeutet nicht zwangsläufig, dass alle Greiferarme der Greifereinrichtung eine solche Kopplungseinrichtung aufweisen müssen, auch wenn dies für eine flexible Einstellbarkeit der Greifereinrichtung vorteilhaft sein kann. Jedenfalls bedeutet dies aber, dass eine Kopplungseinrichtung vorzugsweise nur dazu ausgebildet ist, nur einen einzelnen Greiferarm mit der Antriebseinrichtung zu koppeln oder von dieser zu entkoppeln und nicht mehrere Greiferarme gleichzeitig. Eine solche Ausgestaltung ermöglicht es, mehrere Greiferarme mit nur einer Antriebseinrichtung unabhängig voneinander zu verschwenken und somit die Greifereinrichtung flexibel an einen zu greifenden Gegenstand anzupassen. Insbesondere kann eine gemeinsame Antriebseinrichtung für die Greiferarme vorgesehen sein, was einen kompakten und kostengünstigen Aufbau ermöglicht.

Die Kopplungseinrichtung kann insbesondere derart ausgebildet sein, dass sie eine Antriebskonfiguration und eine Feststellkonfiguration einnehmen kann. In der Antriebskonfiguration ist die Kopplungseinrichtung insbesondere derart konfiguriert, dass der Greiferarm über die Kopplungseinrichtung mit der Antriebseinrichtung gekoppelt ist. In der Feststellkonfiguration ist die Kopplungseinrichtung dann insbesondere derart konfiguriert, dass der Greiferarm von der Antriebseinrichtung entkoppelt ist und eine Schwenkbewegung des Greiferarms um die Schwenkachse blockiert ist. Zu diesem Zweck kann die Greifereinrichtung eine Feststelleinrichtung umfassen, welche dazu ausgebildet ist, eine Schwenkbewegung des wenigstens einen Greiferarms um die Schwenkachse dann zu blockieren, wenn dieser von der Antriebseinrichtung entkoppelt ist. Hierdurch kann verhindert werden, dass nach einem Verschwenken des Greiferarms eine gewünschte Schwenklage im Zuge eines nachfolgenden Handhabungsprozesses wieder verändert wird. Bei einer Mehrzahl von Greiferarmen kann den Greiferarmen insbesondere jeweils eine eigene Feststelleinrichtung zugeordnet sein.

Im Rahmen einer vorteilhaften Ausgestaltung kann die Kopplungseinrichtung an dem Schwenkgelenk eines jeweiligen Greiferarms angeordnet sein und mit diesem zusammenwirken. Insbesondere kann das Schwenkgelenk in der Antriebskonfiguration der Kopplungseinrichtung mit der Antriebseinrichtung, insbesondere drehmomentübertragend, gekoppelt sein.

Zum Schalten der Kopplungseinrichtung kann vorzugsweise eine entsprechende Aktorik vorgesehen sein. Insbesondere kann die Aktorik über eine Steuereinrichtung ansteuerbar sein. Die Aktorik kann insbesondere an, vorzugsweise in, dem Schwenkgelenk angeordnet sein, was eine besonders kompakte Bauform ermöglicht.

Im Rahmen einer vorteilhaften Ausgestaltung kann die Kopplungseinrichtung ein von der Antriebseinrichtung, insbesondere dauerhaft, antreibbares oder angetriebenes erstes Kupplungsteil und ein mit dem Schwenkgelenk zusammenwirkendes zweites Kupplungsteil umfassen. Dann kann die Aktorik insbesondere dazu ausgebildet sein, das erste Kupplungsteil und/oder das zweite Kupplungsteil derart zu verlagern, dass wahlweise eine erste oder eine zweite Kupplungskonfiguration einstellbar ist. Insbesondere kann die Aktorik dazu ausgebildet sein, das erste Kupplungsteil und das zweite Kupplungsteil derart relativ zueinander zu verfahren, dass das erste Kupplungsteil und das zweite Kupplungsteil wahlweise voneinander entkoppelt (erste Kupplungskonfiguration) oder miteinander, insbesondere drehmomentübertragend, gekoppelt (zweite Kupplungskonfiguration) sind. Vorzugsweise stehen das erste und das zweite Kopplungsteil in der ersten Kupplungskonfiguration außer Eingriff und in der zweiten Kupplungskonfiguration in Eingriff miteinander. Insbesondere ist die Aktorik dazu ausgebildet, das zweite Kupplungsteil relativ zu dem ersten Kupplungsteil zu verlagern.

Das erste und/oder das zweite Kupplungsteil können insbesondere als Zahnscheibe oder Zahnrad ausgebildet sein oder einen Zahnabschnitt umfassen. Dann können das erste Kupplungsteil und das zweite Kupplungsteil insbesondere derart ausgebildet sein, dass ihre Zähne im gekoppelten Zustand, also in der zweiten Kupplungskonfiguration bzw. Antriebskonfiguration der Kopplungseinrichtung, miteinander kämmen und im entkoppelten Zustand, also in der ersten Kupplungskonfiguration, voneinander getrennt sind.

Das erste Kupplungsteil kann insbesondere um eine Drehachse drehbar gelagert sein. Die Drehachse kann dabei parallel zu der Schwenkachse orientiert sein. Es ist auch denkbar, dass die Drehachse orthogonal zu der Schwenkachse orientiert ist. Insbesondere ist das erste Kupplungsteil von der Antriebseinrichtung um die Drehachse drehend antreibbar.

Die Antriebseinrichtung kann vorzugsweise einen Antriebsmotor umfassen. Der Antriebsmotor kann insbesondere über ein Kraftübertragungsmittel mit dem ersten Kupplungsteil einer jeweiligen Kopplungseinrichtung, insbesondere drehmomentübertragend, weiter insbesondere das Kupplungsteil antreibend, gekoppelt sein. Bei dem Kraftübertragungsmittel kann es sich beispielsweise um einen Riemen, weiter insbesondere um einen Zahnriemen oder Keilriemen handeln. Es ist auch denkbar, dass der Antriebsmotor über eine Kette mit dem ersten Kupplungsteil zusammenwirkt. Eine solche Ausgestaltung ermöglicht es, auf einfache Weise eine Antriebsbewegung des Antriebsmotors auch über größere Strecken sicher zu übertragen, bspw. von einem Greifergrundkörper zu dem Schwenkgelenk. Insbesondere kann der Antriebsmotor in einen Greifergrundkörper integriert sein.

Besonders vorteilhaft erweist es sich, wenn das zweite Kupplungsteil in der ersten Kupplungskonfiguration (wenn es außer Eingriff mit dem ersten Kupplungsteil ist) mit einer Feststelleinrichtung derart zusammenwirkt, dass eine Schwenkbewegung des Greiferarms um die Schwenkachse blockiert ist. Dann kann die Aktorik insbesondere dazu ausgebildet sein, das zweite Kupplungsteil derart zu verfahren, dass es wahlweise mit dem ersten Kupplungsteil oder mit der Feststelleinrichtung in Eingriff bringbar ist. Die Feststelleinrichtung kann insbesondere dazu ausgebildet sein, eine Schwenkbewegung des zweiten Kupplungsteils, insbesondere um die Schwenkachse, zu blockieren. Bei einer Ausgestaltung des zweiten Kupplungsteils als Zahnscheibe, Zahnscheibenabschnitt oder Zahnrad kann die Feststelleinrichtung vorzugsweise ebenfalls einen Zahnabschnitt aufweisen, mit welchem das zweite Kupplungsteil dann in der ersten Kupplungskonfiguration der Kopplungseinrichtung in Eingriff steht. Die erste Kupplungskonfiguration entspricht dann der Feststellkonfiguration der Kopplungseinrichtung.

Insbesondere kann das Schwenkgelenk eine Gelenkwelle umfassen, welche um die Schwenkachse schwenkbar gelagert ist, beispielsweise über Kugellager. Die Gelenkwelle ist insbesondere mit dem Greiferarm drehfest um die Schwenkachse gekoppelt. Insbesondere ist dann auch das zweite Kupplungsteil drehfest um die Schwenkachse mit der Gelenkwelle gekoppelt. Insofern kann eine von dem ersten Kupplungsteil auf das zweite Kupplungsteil übertragene Antriebsbewegung unmittelbar auf die Gelenkwelle und dann auf den Greiferarm übertragen werden. Eine solche Ausgestaltung ist besonders kompakt aufgebaut, da kein zusätzliches Getriebe zur Übertragung einer Antriebsbewegung des zweiten Kupplungsteils auf den Greiferarm erforderlich ist.

Das zweite Kupplungsteil ist, insbesondere axial, relativ zu der Gelenkwelle verlagerbar ausgebildet, insbesondere durch axiale Verlagerung wahlweise mit dem ersten Kupplungsteil in Eingriff oder außer Eingriff bringbar. Insbesondere kann die Aktorik dazu ausgebildet sein, das zweite Kupplungsteil relativ zu der Gelenkwelle, insbesondere axial, zu verlagern.

Im Rahmen einer vorteilhaften Ausgestaltung kann die Aktorik einen mit dem zweiten Kupplungsteil einerseits und mit der Gelenkwelle andererseits um die Schwenkachse drehfest gekoppelten Schaltbolzen zum Schalten der Kopplungseinrichtung umfassen. Der Schaltbolzen ist vorzugsweise derart ausgebildet, dass er axial zu der Gelenkwelle, insbesondere entlang der Schwenkachse oder entlang einer zu der Schwenkachse parallelen Verschiebeachse, zwischen einer ersten Schaltposition und einer zweiten Schaltposition verlagerbar ist. Der Schaltbolzen und das zweite Kupplungsteil wirken dabei insbesondere derart zusammen, dass in der ersten Schaltposition des Schaltbolzens das zweite Kupplungsteil von dem ersten Kupplungsteil entkoppelt ist (erste Kupplungskonfiguration) und dass in der zweiten Schaltposition des Schaltbolzens das zweite Kupplungsteil mit dem ersten Kupplungsteil gekoppelt ist, insbesondere in Eingriff steht (zweite Kupplungskonfiguration). Vorzugsweise wirken Schaltbolzen und zweites Kupplungsteil derart zusammen, dass in der ersten Schaltposition des Schaltbolzens das zweite Kupplungsteil mit der Feststelleinrichtung, eine Schwenkbewegung des Greiferarms um die Schwenkachse blockierend, zusammenwirkt.

Es ist denkbar, dass eine motorisch betriebene Verstelleinrichtung vorgesehen ist, mittels derer der Schaltbolzen zwischen der ersten und zweiten Schaltposition verlagerbar ist. Es ist auch denkbar, dass der Schaltbolzen als Pneumatikzylinder ausgebildet ist, welcher durch Beaufschlagung mittels Druckfluid, insbesondere Druckluft verlagerbar ist. Dann kann die Greifereinrichtung eine Ventileinrichtung umfassen, welche dazu ausgebildet ist, eine Druckfluidzufuhr zu dem Pneumatikzylinder zu steuern. Eine solche Ausgestaltung mit Pneumatikzylinder ist in der Herstellung kostengünstig und in der Funktion zuverlässig. Zudem ist bei einer solchen Ausgestaltung kein elektrischer Anschluss der Greifereinrichtung zwingend erforderlich, was einen flexiblen Einsatz der Greifereinrichtung begünstigt.

Der Schaltbolzen kann in Richtung der ersten Schaltposition, beaufschlagt, insbesondere federbeaufschlagt, sein. Insofern befindet sich der Schaltbolzen vorzugsweise in der ersten Schaltposition, wenn er nicht aktuiert, insbesondere nicht mit Druckfluid beaufschlagt, ist. Wie vorstehend erwähnt, kann das zweite Kupplungsteil in der ersten Schaltposition vorzugsweise mit einer Feststelleinrichtung zusammenwirken. Durch die Beaufschlagung des Schaltbolzens in Richtung der ersten Schaltposition kann insofern sichergestellt werden, dass dann, wenn der Schaltbolzen nicht aktuiert ist, insbesondere nicht mit Druckluft beaufschlagt ist, eine Schwenkbewegung des Greiferarms um die Schwenkachse blockiert ist.

Im Rahmen einer besonders kompakten Ausgestaltung kann die Gelenkwelle als Hohlwelle ausgebildet sein. Dann kann der Schaltbolzen zumindest abschnittsweise in der Hohlwelle angeordnet sein. Insbesondere kann die Gelenkwelle den Schaltbolzen zumindest abschnittsweise umhüllen. Vorzugsweise kann der Schaltbolzen in der Hohlwelle axial, insbesondere entlang der Schwenkachse verlagerbar, geführt sein. Dann kann es sich bei der ersten Schaltposition des Schaltbolzens vorzugsweise um eine relativ zu der Gelenkwelle axial eingefahrene Position handeln und bei der zweiten Schaltposition um eine relativ zu der Gelenkwelle axial ausgefahrene Position handeln.

Im Rahmen einer vorteilhaften Weiterbildung kann eine Fluidführung, insbesondere Unterdruck- oder Überdruckführung, vorgesehen sein, welche dazu ausgebildet ist, Fluid, insbesondere Druckluft und/oder Unterdruck, zu dem Greiferarm, insbesondere zu dem Greifendeffektor, zu leiten. Die Fluidführung ist insbesondere derart ausgebildet, dass Fluid durch das Schwenkgelenk durchführbar ist. Insofern verläuft die Fluidführung insbesondere durch das Schwenkgelenk. Auf diese Weise können außenliegende Fluidführungen, insbesondere Schläuche eingespart und somit potentielle Störkonturen beim Greifen reduziert werden.

Die Greifereinrichtung kann außerdem eine Steuereinrichtung umfassen, welche dazu ausgebildet ist, die wenigstens eine Kopplungseinrichtung und/oder die Antriebseinrichtung anzusteuern. Dies ermöglicht es, eine Konfiguration der Greifereinrichtung, insbesondere eine Schwenklage der Greiferarme, automatisiert einzustellen.

Für einen automatisierten Prozess kann es außerdem vorteilhaft sein, wenn die Greifereinrichtung eine mit der Steuereinrichtung zusammenwirkende Erfassungseinrichtung zum Erfassen einer Form, insbesondere einer Außenfläche, eines zu greifenden Gegenstandes umfasst. Dann kann die Steuereinrichtung dazu ausgebildet sein, um in Abhängigkeit eines Signals der Erfassungseinrichtung die Kopplungseinrichtungen, insbesondere deren Aktorik, anzusteuern. Beispielsweise kann die Greifereinrichtung eine Kameraeinrichtung mit einer Kamera umfassen. Die Kamera kann insbesondere dazu ausgebildet sein, Position und Lage eines zu greifenden Gegenstands, insbesondere Position und Lage einer Außenfläche des Gegenstands, zu erkennen. Auf diese Weise kann insofern vor dem Anfahren der Greifendeffektoren an einen Gegenstand dieser charakterisiert werden und eine mögliche Greiffläche auf dem Gegenstand detektiert werden. Dies ermöglicht es, eine Schwenklage der Greiferarme und somit eine Position der Greifendeffektoren in Abhängigkeit eines zu greifenden Gegenstandes automatisch anzupassen.

Zu diesem Zweck kann die Sauggreifereinrichtung optional weitere Sensoren, beispielsweise Unterdrucksensoren umfassen, welche dazu ausgebildet sind, zu erkennen, ob ein jeweiliger Greifendeffektor nach Ansetzen der Greifereinrichtung an den Gegenstand auch tatsächlich an der vorgegebenen Greifposition oder überhaupt an dem zu greifenden Gegenstand angreift. Dies ermöglicht ist, einen automatischen Einstellprozess der Greiferarme iterativ zu verbessern, beispielsweise unter Verwendung von Methoden der künstlichen Intelligenz (maschinelles Lernen).

Zur Lösung der eingangs genannten Aufgabe wird außerdem ein Verfahren zum Betreiben einer vorstehend beschriebenen Greifereinrichtung mit Steuereinrichtung und Erfassungseinrichtung vorgeschlagen. Die vorstehend in Bezug auf die Greifereinrichtung beschriebenen Merkmale und Vorteile können zur Ausgestaltung des Verfahrens dienen.

Gemäß dem Verfahren kann insbesondere zunächst mittels der Erfassungseinrichtung eine Form eines zu greifenden Gegenstands, insbesondere eine Außenfläche, erkannt werden. In Abhängigkeit der erfassten Form kann dann eine potentielle Greiffläche auf dem Gegenstand ermittelt werden. Beispielsweise ist es denkbar, dass ein mit einer Kameraeinrichtung der Erfassungseinrichtung aufgenommenes Bild des Gegenstandes mit bekannten Methoden der Bildanalyse rechentechnisch verarbeitet wird, um die Greiffläche zu ermitteln, insbesondere in Abhängigkeit von die Greifereinrichtung repräsentierenden Randbedingungen. Sodann kann mittels der Steuereinrichtung die Aktorik eines, mehrerer oder aller Schwenkgelenke der Greifereinrichtung und/oder die Antriebseinrichtung angesteuert werden, insbesondere in Abhängigkeit der ermittelten Greiffläche. Eine Ansteuerung erfolgt insbesondere derart, dass die Greiferarme derart um ihre Schwenkachsen verschwenkt werden, dass zumindest eine Teilmenge der Greifendeffektoren, vorzugsweise alle Greifendeffektoren, nach abgeschlossener Verlagerung innerhalb einer Fläche liegen, deren Abmessungen der vorher ermittelten Greiffläche entspricht. Im Anschluss kann dann die Greifereinrichtung mit den Greifendeffektoren auf den zu greifenden Gegenstand aufgesetzt werden und der Gegenstand mit den Greifendeffektoren gegriffen, z.B. angesaugt, werden.

Die Erfindung wird im Folgenden anhand der Figuren näher erläutert.

Es zeigen:
Fig. 1 skizzierte Darstellung einer Ausgestaltung einer Greifereinrichtung in einer perspektivischen Darstellung;
Fig. 2 skizzierte Darstellung einer Baugruppe der Greifereinrichtung gemäß Fig. 1 in einer Schnittansicht; und
Fig. 3 vergrößerte Ansicht des in Fig. 1 mit III bezeichneten Ausschnitts.

In der nachfolgenden Beschreibung sowie in den Figuren sind für identische oder einander entsprechende Merkmale jeweils dieselben Bezugszeichen verwendet.

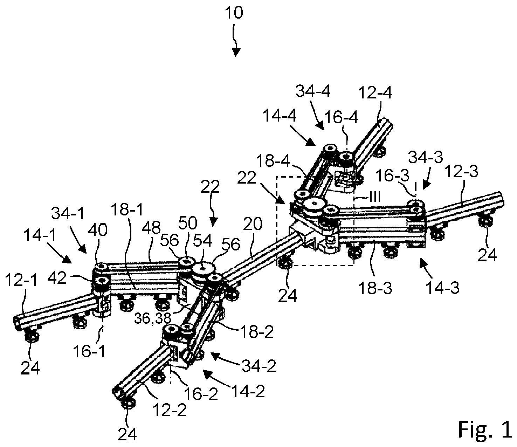

Die Figur 1 zeigt eine Ausgestaltung einer Greifereinrichtung, welche insgesamt mit dem Bezugszeichen 10 bezeichnet ist. Die Greifereinrichtung 10 dient zum Greifen von Gegenständen (nicht dargestellt) und umfasst in dem dargestellten Beispiel vier Greiferarme 12-1, 12-2, 12-3, 12-4. Die Greiferarme 12-1, 12-2, 12-3, 12-4 sind jeweils über ein Schwenkgelenk 14-1, 14-2, 14-3, 14-4 um eine jeweilige Schwenkachse 16-1, 16-2, 16-3, 16-4 schwenkbar mit einem jeweiligen Verbindungsarm 18-1, 18-2, 18-3, 18-4 verbunden. Die Verbindungsarme 18-1, 18-2, 18-3, 18-4 sind wiederum schwenkbar an einem Greifergrundkörper 20 angelenkt. In dem dargestellten Beispiel sind jeweils zwei Verbindungsarme 18-1 und 18-2 bzw. 18-3 und 18-4 über eine nachfolgend noch näher erläuterte Schwenkeinheit 22 mit dem Greifergrundkörper 20 verbunden.

Wie aus Figur 1 ersichtlich, sind der Greifergrundkörper 20, die Verbindungsarme 18-1, 18-2, 18-3, 18-4 und die Greiferarme 12-1, 12-2, 12-3, 12-4 beispielhaft als Hohlprofile ausgebildet. In dem dargestellten Beispiel sind sowohl an den Greiferarmen 12-1, 12-2, 12-3, 12-4, als auch an den Verbindungsarme 18-1, 18-2, 18-3, 18-4, als auch an dem Greifergrundkörper 20 Greifendeffektoren 24 angeordnet, welche beispielhaft als Sauggreifer ausgebildet sind.

Die in Figur 1 dargestellte Anordnung ist lediglich beispielhaft. Bei nicht dargestellten Ausgestaltungen ist es auch möglich, dass mehr oder weniger Greiferarme 12-1, 12-2, 12-3, 12-4 vorgesehen sind. Es ist auch denkbar, dass die Verbindungsarme 18-1, 18-2, 18-3, 18-4 drehfest mit dem Greifergrundkörper 20 verbunden sind. Zudem ist es beispielsweise denkbar, dass nur an den Greiferarmen 12-1, 12-2, 12-3, 12-4 und/oder den Verbindungsarmen 18-1, 18-2, 18-3, 18-4 Greifendeffektoren 24 angeordnet sind.

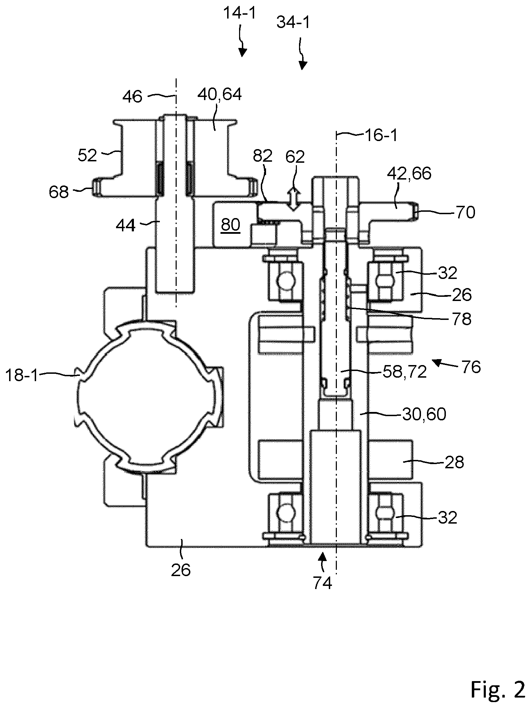

Die Ausgestaltung und Funktionsweise der Schwenkgelenke 14-1, 14-2, 14-3, 14-4 wird im Folgenden unter Bezugnahme auf die Fig. 2 erläutert, welche das Schwenkgelenk 14-1 des Greiferarms 12-1 gemäß Fig. 1 in einer vergrößerten Schnittansicht zeigt. Die übrigen Schwenkgelenke 14-2, 14-3, 14-4 sind vorzugsweise analog aufgebaut.

Wie aus Figur 2 ersichtlich, umfasst das Schwenkgelenk 14-1, einen verbindungsarmseitigen Schwenkabschnitt 26, welcher drehfest mit dem Verbindungsarm 18-1 verbunden ist. Das Schwenkgelenk 14-1 umfasst außerdem einen Greiferarmseitigen Schwenkabschnitt 28, welcher mit dem Greiferarm 12-1 drehfest verbunden ist. Der Greiferarmseitige Schwenkabschnitt 28 ist drehfest mit einer Gelenkwelle 30 gekoppelt, welche über Lager 32, bspw. Kugellager, um die Schwenkachse 16-1 schwenkbar an dem verbindungsarmseitigen Schwenkabschnitt 26 gelagert ist.

Zum Antreiben einer Schwenkbewegung des Greiferarms 14-1 um die Schwenkachse 16-1 ist die Gelenkwelle 30 über eine Kopplungseinrichtung 34-1 mit einer Antriebseinrichtung 36 (vgl. Fig. 1) koppelbar. Die Kopplungseinrichtung 34 ist insbesondere dazu ausgebildet, wahlweise die Gelenkwelle 30 und somit den Greiferarm 14-1 mit der Antriebseinrichtung 36 zu koppeln oder von dieser zu entkoppeln. Die Antriebseinrichtung 36 umfasst vorzugsweise einen Antriebsmotor 38, welcher in dem dargestellten Beispiel in der Schwenkeinheit 22 angeordnet ist (nachfolgend noch im Detail erläutert).

Die Kopplungseinrichtung 34-1 umfasst ein erstes Kupplungsteil 40 und ein zweites Kupplungsteil 42. Das erste Kupplungsteil 40 ist in dem dargestellten Beispiel um eine an dem verbindungsarmseitigen Schwenkabschnitt 26 angeordnete Welle 44 um eine Drehachse 46 drehbar gelagert. Wie aus Figur 2 ersichtlich, ist die Drehachse 46 vorzugsweise parallel zu der Schwenkachse 16-1 des Schwenkgelenks 14 ausgerichtet.

Das erste Kupplungsteil 40 ist mit dem Antriebsmotor 38 koppelbar und von diesem um die Drehachse 46 antreibbar. Wie in Fig. 1 gezeigt ist das erste Kupplungsteil 40 hierzu über ein Kraftübertragungsmittel 48, beispielhaft in der Form eines Riemens 48, mit einem an der Schwenkeinheit 22 drehbar gelagerten Drehteil 50 gekoppelt. Zu diesem Zweck weist das erste Kupplungsteil 40 entsprechende Riemenaufnahmen 52 zur Aufnahme des Riemens 48 auf (vgl. Fig. 2). Das Drehteil 50 kann von dem Antriebsmotor 38 permanent angetrieben sein, insbesondere permanent mit einer von dem Antriebsmotor 38 angetriebenen Antriebswelle 54 gekoppelt sein. Zu diesem Zweck können das Drehteil 50 und die Antriebswelle 54 beispielswiese jeweils eine Zahnscheibe 56 umfassen, welche miteinander in Eingriff stehen. Es ist auch möglich, dass die Schwenkeinheit 22 ein Getriebe umfasst, welches dazu ausgebildet ist, das Drehteil 50 wahlweise mit dem Antriebsmotor 38 zu koppeln oder von diesem zu entkoppeln.

Das zweite Kupplungsteil 42 ist über einen Schaltbolzen 58 mit der Gelenkwelle 30 drehfest um die Schwenkachse 16 gekoppelt. Insofern sind eine Schwenkbewegung des zweiten Kupplungsteils 42, des Schaltbolzens 58 und der Gelenkwelle 30 um die Schwenkachse 16 miteinander gekoppelt.

Wie aus Figur 2 ersichtlich, ist die Gelenkwelle 30 als Hohlwelle 60 ausgebildet und umhüllt den Schaltbolzen abschnittsweise. Der Schaltbolzen 58 ist innerhalb der Gelenkwelle 30, 60 axial entlang der Schwenkachse 16 verlagerbar gelagert. Im Konkreten ist der Schaltbolzen 58 zwischen einer in Figur 2 dargestellten axial eingefahrenen ersten Schaltposition und einer ausgehend von dieser Schaltposition axial ausgefahrenen zweiten Schaltposition verlagerbar (in Fig. 2 durch den mit Bezugszeichen 62 bezeichneten Doppelpfeil angedeutet).

In der in Figur 2 dargestellten axial eingefahrenen ersten Schaltposition ist das zweite Kupplungsteil 42 außer Eingriff mit dem ersten Kupplungsteil 40. Eine Antriebsbewegung des ersten Kupplungsteils 40 wird insofern nicht auf das zweite Kupplungsteil 42 und die Gelenkwelle 30 übertragen. Dies entspricht einer ersten Kupplungskonfiguration der Kopplungseinrichtung 34.

In der zweiten Schaltposition des Schaltbolzens (nicht dargestellt) steht das zweite Kupplungsteil 42 mit dem ersten Kupplungsteil 40 in Eingriff, sodass eine Antriebsbewegung des ersten Kupplungsteils 40 auf das zweite Kupplungsteil 42 und somit auf die Gelenkwelle 30 und den Greiferarm 12 übertragbar ist. Zu diesem Zweck sind das erste Kupplungsteil 40 und das zweite Kupplungsteil 42 in dem dargestellten Beispiel als Zahnscheiben 64, 66 mit entsprechenden Zahnabschnitten 68, 70 ausgebildet, welche in der zweiten Schaltposition des Schaltbolzens 58 miteinander kämmen. Dies entspricht einer zweiten Kupplungskonfiguration bzw. einer Antriebskonfiguration der Kopplungseinrichtung 34.

Der Schaltbolzen 58 ist in dem dargestellten Beispiel als Pneumatikzylinder 72 ausgebildet, welcher durch Beaufschlagung mit Druckfluid, insbesondere Druckluft, entlang der Schwenkachse 16 (axial) verlagerbar ist. Zu diesem Zweck kann die Gelenkwelle 30 einen Fluidanschluss 74 zum Anschluss an eine Überdruckversorgung (nicht dargestellt) aufweisen. Darüber hinaus kann in einer Fluidverbindung zwischen Überdruckversorgung und Schaltbolzen 58, 72, insbesondere an dem Schwenkgelenk 14 selbst, eine Ventileinrichtung (nicht dargestellt) zur Steuerung einer Druckluftzufuhr zu dem Schaltbolzen 58, 72 vorgesehen sein. Der Schaltbolzen 58, 72 bildet insofern eine Aktorik 76 zum Schalten der Kopplungseinrichtung 34-1 bzw. zum Verlagern des zweiten Kopplungsteils 42 relativ zu dem ersten Kopplungsteil 40.

Wie in Figur 2 beispielhaft dargestellt, kann der Schaltbolzen 58 in Richtung der ersten Schaltposition beaufschlagt sein, beispielsweise über eine Federeinrichtung 78. Wird der Schaltbolzen 58 nicht mit Druckluft beaufschlagt, befindet sich der Schaltbolzen 58 somit in der in Fig. 2 dargestellten ersten Schaltposition.

In dem dargestellten Beispiel ist außerdem eine Feststelleinrichtung 80 vorgesehen, welche dazu ausgebildet ist, eine Schwenkbewegung des Greiferarms 12 um die Schwenkachse 16 zu blockieren, wenn das zweite Kupplungsteil 42 von dem ersten Kupplungsteil 40 entkoppelt ist. In dem dargestellten Beispiel umfasst die Feststelleinrichtung 80 einen Zahnabschnitt 82, welcher derart angeordnet ist, dass das zweite Kupplungsteil 42 mit seinem Zahnabschnitt 70 in der ersten Schaltposition des Schaltbolzens 58 mit dem Zahnabschnitt 82 der Feststelleinrichtung 80 derart zusammenwirkt, dass eine Schwenkbewegung des zweiten Kupplungsteils 42 um die Schwenkachse 16 und somit eine Schwenkbewegung des Greiferarms 14 um die Schwenkachse 16 blockiert ist (vgl. Fig. 2). Die in Fig. 2 dargestellte zweite Kupplungskonfiguration entspricht insofern einer Feststellkonfiguration der Kopplungseinrichtung.

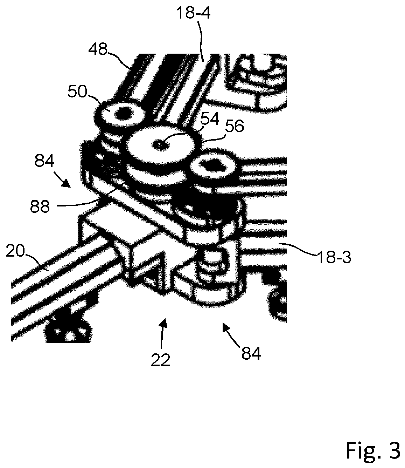

Die Verbindungsarme 18-1, 18-2, 18-3, 18-4 sind in dem dargestellten Beispiel ebenfalls über Schwenkgelenke 84 mit dem Greifergrundkörper 20 verbunden (in Fig. 3 beispielhaft für die Verbindungsarme 18-3 und 18-4 dargestellt). Die Verbindungsarme 18-1, 18-2, 18-3, 18-4 können ihrerseits über den gleichen oder einen ähnlichen Kopplungsmechanismus wie die Greiferarme 12-1, 12-2, 12-3, 12-4 mit dem Antriebsmotor 38 gekoppelt oder von diesem entkoppelt werden. Beispielsweise ist es denkbar, dass die Schwenkgelenke 84 der Verbindungsarme 18-1, 18-2, 18-3, 18-4 ebenfalls jeweils eine Gelenkwelle mit Schaltbolzen und Kupplungsteil aufweisen. Das Kupplungsteil kann insbesondere derart ausgebildet und von dem Schaltbolzen derart verlagerbar sein, dass es wahlweise mit der Antriebswelle 54 koppelbar oder von dieser entkoppelbar ist -und somit eine Schwenkbewegung des jeweiligen Verbindungsarms 18-1, 18-2, 18-3, 18-4 wahlweise antreibbar oder nicht antreibbar ist. Zu diesem Zweck kann die Antriebswelle 54 zusätzlich zu der mit den Drehteilen 50 zusammenwirkenden Zahnscheibe 56 eine zweite, axial versetzte Zahnscheibe 88 aufweisen, mit welcher das Kupplungsteil (nicht dargestellt) des Schwenkgelenks 84 in Eingriff bringbar ist, bspw. in der Art wie das zweite Kupplungsteil 42 mit dem ersten Kupplungsteil 40 in Eingriff bringbar ist.

Im Zuge eines Betriebs der Greifereinrichtung 10 ist es insbesondere denkbar, dass zum Verschwenken eines Verbindungsarms 18-3 das entsprechende Schwenkgelenk 84 mit dem Antriebsmotor 38 über vorstehend erläuterten Mechanismus gekoppelt wird und gleichzeitig das Schwenkgelenk 14-3 des mit dem Verbindungsarm 18-3 gekoppelten Greiferarms 12-3 mittels der Kopplungseinrichtung 34-3 von der Antriebseinrichtung 36 entkoppelt wird. Eine Drehbewegung der Antriebswelle 54 führt dann nur zu einer Schwenkbewegung des Verbindungsarms 18-3. Zwar ist es möglich, dass über das Drehteil 50 das erste Kupplungsteil 40 der Kopplungseinrichtung 34-3 des Greiferarms 34-3 angetrieben wird, eine Antriebsbewegung wird aber wie vorstehend erläutert nicht von dem ersten Kupplungsteil 40 auf das entsprechende zweite Kupplungsteil 42 übertragen, wenn sich die Kopplungseinrichtung 34 in der Feststellkonfiguration befindet.

Zum Verschwenken des Greiferarms 12 kann hingegen der mit dem jeweiligen Greiferarm 12 verbundene Verbindungsarm 18 über vorstehend erläuterten Mechanismus von dem Antriebsmotor 38 entkoppelt werden und der Greiferarm 12 über die Kopplungseinrichtung 34 mit der Antriebseinrichtung 36 gekoppelt werden. Eine Antriebsbewegung der Antriebswelle 54 führt dann nur zu einer Schwenkbewegung des Greiferarms 12. Auf diese Weise lassen sich somit mit nur einer Antriebseinrichtung 36 Verbindungsarme 18 und Greiferarme 12 voneinander unabhängig bewegen.

Die Greifereinrichtung 10 kann insbesondere eine Steuereinrichtung (nicht dargestellt) umfassen, welche dazu ausgebildet ist, die Aktorik 76 und/oder die Antriebseinrichtung 36 anzusteuern. Beispielsweise ist es denkbar, dass die Steuereinrichtung dazu ausgebildet ist, Ventile anzusteuern, um eine Druckluftzufuhr zu den Schaltbolzen 58, 70 zu steuern.

Wie vorstehend erwähnt, kann die Greifereinrichtung 10 bei nicht dargestellten Ausgestaltungen außerdem eine mit der Steuereinrichtung zusammenwirkende Erfassungseinrichtung zum Erfassen einer Form, insbesondere einer Außenfläche, eines zu greifenden Gegenstands umfassen.

## Patentansprüche

1. Greifereinrichtung (10) zum Greifen eines Gegenstandes, umfassend
- wenigstens einen Greiferarm (12-1,12-2,12-3,12-4), an welchem wenigstens ein Greifendeffektor (24) angeordnet ist, wobei der wenigstens eine Greiferarm (12-1,12-2,12-3,12-4) über ein Schwenkgelenk (14-1,14-2,14-3,14-4) um eine Schwenkachse (16-1,16-2,16-3,16-4) schwenkbar an der Greifereinrichtung (10) gelagert ist,
- eine Antriebseinrichtung (36) zum Antreiben einer Schwenkbewegung des wenigstens einen Greiferarms (12-1,12-2,12-3,12-4) um die Schwenkachse (16-1,16-2,16-3,16-4),
**dadurch gekennzeichnet, dass**
dem wenigstens einen Greiferarm (12-1,12-2,12-3,12-4) eine Kopplungseinrichtung (34-1,34-2,34-3,34-4) zugeordnet ist, welche dazu ausgebildet ist, den Greiferarm (12-1,12-2,12-3,12-4) wahlweise mit der Antriebseinrichtung (36) zu koppeln oder von der Antriebseinrichtung (36) zu entkoppeln.

2. Greifereinrichtung (10) nach Anspruch 1, wobei eine Mehrzahl von Greiferarmen (12-1,12-2,12-3,12-4) vorgesehen ist, welche jeweils über ein Schwenkgelenk (14-1,14-2,14-3,14-4) um eine jeweilige Schwenkachse (16-1,16-2,16-3,16-4) schwenkbar an der Greifereinrichtung (10) gelagert sind, wobei den Greiferarmen (12-1,12-2,12-3,12-4) jeweils eine eigene Kopplungseinrichtung (34-1,34-2,34-3,34-4) zugeordnet ist, welche dazu ausgebildet ist, den ihr zugeordneten Greiferarm (12-1,12-2,12-3,12-4) wahlweise mit der Antriebseinrichtung (36) zu koppeln oder von der Antriebseinrichtung (36) zu entkoppeln.

3. Greifereinrichtung (10) nach einem der Ansprüche 1 oder 2, wobei die Kopplungseinrichtung (34-1,34-2,34-3,34-4) eine Antriebskonfiguration und eine Feststellkonfiguration aufweist, wobei in der Antriebskonfiguration der Greiferarm (12-1,12-2,12-3,12-4) mit der Antriebseinrichtung (36) gekoppelt ist und wobei in der Feststellkonfiguration eine Schwenkbewegung des Greiferarms (12-1,12-2,12-3,12-4) um die Schwenkachse (16-1,16-2,16-3,16-4) blockiert ist, insbesondere wobei eine Feststelleinrichtung (80) vorgesehen ist, welche dazu ausgebildet ist, eine Schwenkbewegung des Greiferarms (12-1,12-2,12-3,12-4) um die Schwenkachse (16-1,16-2,16-3,16-4) dann zu blockieren, wenn dieser von der Antriebseinrichtung (36) entkoppelt ist.

4. Greifereinrichtung (10) nach einem der vorherigen Ansprüche, wobei die Kopplungseinrichtung (34-1,34-2,34-3,34-4) an dem Schwenkgelenk (16-1,16-2,16-3,16-4) angeordnet ist und mit diesem zusammenwirkt.

5. Greifereinrichtung (10) nach einem der vorherigen Ansprüche, wobei eine Aktorik (76) zum Schalten der Kopplungseinrichtung (34-1,34-2,34-3,34-4), insbesondere zum Überführen der Kopplungseinrichtung (34-1,34-2,34-3,34-4) zwischen der Antriebskonfiguration und der Feststellkonfiguration, vorgesehen ist, insbesondere wobei die Aktorik (76) in dem Schwenkgelenk (14-1, 14-2, 14-3, 14-4) angeordnet ist.

6. Greifereinrichtung (10) nach Anspruch 5, wobei die Kopplungseinrichtung (34-1,34-2,34-3,34-4) ein von der Antriebseinrichtung (36) antreibbares erstes Kupplungsteil (40) und ein mit dem Schwenkgelenk (14-1,14-2,14-3,14-4) zusammenwirkendes zweites Kupplungsteil (42) umfasst, wobei die Aktorik (76) dazu ausgebildet ist, das erste Kupplungsteil (40) und/oder das zweite Kupplungsteil (42) derart zu verlagern, dass wahlweise eine erste oder eine zweite Kupplungskonfiguration einstellbar ist, wobei das zweite Kupplungsteil (42) in der ersten Kupplungskonfiguration von dem ersten Kupplungsteil (40) entkoppelt ist und in der zweiten Kupplungskonfiguration mit dem ersten Kupplungsteil (40) gekoppelt ist, insbesondere mit dem ersten Kupplungsteil (40) in Eingriff steht.

7. Greifereinrichtung (10) nach Anspruch 6, wobei das zweite Kupplungsteil (42) in der ersten Kupplungskonfiguration mit einer Feststelleinrichtung (80) derart zusammenwirkt, dass eine Schwenkbewegung des Greiferarms (12-1,12-2,12-3,12-4) um die Schwenkachse (16-1,16-2,16-3,16-4) blockiert ist.

8. Greifereinrichtung (10) nach einem der Ansprüche 6 oder 7, wobei das Schwenkgelenk (14-1,14-2,14-3,14-4) eine Gelenkwelle (30) umfasst, welche um die Schwenkachse (16-1,16-2,16-3,16-4)) schwenkbar gelagert ist und mit dem Greiferarm (12-1,12-2,12-3,12-4) drehfest gekoppelt ist, und wobei das zweite Kupplungsteil (42) drehfest mit der Gelenkwelle (30) gekoppelt ist.

9. Greifereinrichtung (10) nach Anspruch 8, wobei die Aktorik (76) dazu ausgebildet ist, das zweite Kupplungsteil (42) relativ zu der Gelenkwelle (30), insbesondere axial, zu verlagern.

10. Greifereinrichtung (10) nach Anspruch 9, wobei die Aktorik (76) einen mit dem zweiten Kupplungsteil (42) einerseits und mit der Gelenkwelle (30) andererseits drehfest gekoppelten Schaltbolzen (58) umfasst, welcher, insbesondere axial zu der Gelenkwelle (30), zwischen einer ersten Schaltposition und einer zweiten Schaltposition verlagerbar ist, wobei der Schaltbolzen (58) mit dem zweiten Kupplungsteil (42) derart zusammenwirkt, dass sich das zweite Kupplungsteil (42) in der ersten Kupplungskonfiguration befindet, wenn sich der Schaltbolzen in der ersten Schaltposition befindet, und dass sich das zweite Kupplungsteil (42) in der zweiten Kupplungskonfiguration befindet, wenn sich der Schaltbolzen in der zweiten Schaltposition befindet .

11. Greifereinrichtung (10) nach Anspruch 10, wobei der Schaltbolzen (58) als Pneumatikzylinder (72) ausgebildet ist, welcher durch Beaufschlagung mittels Druckfluid, insbesondere Druckluft, verlagerbar ist.

12. Greifereinrichtung (10) nach einem der Ansprüche 10 oder 11, wobei der Schaltbolzen (58) in Richtung der ersten Schaltposition beaufschlagt, insbesondere federbeaufschlagt, ist.

13. Greifereinrichtung (10) nach einem der Ansprüche 10 bis 12, wobei die Gelenkwelle (30) als Hohlwelle (60) ausgebildet ist und den Schaltbolzen (58) zumindest abschnittsweise umhüllt, insbesondere wobei der Schaltbolzen (58) in der Hohlwelle (60) axial verlagerbar geführt ist.

14. Greifereinrichtung (10) nach einem der Ansprüche 6 bis 13, wobei die Antriebseinrichtung (36) einen Antriebsmotor (38) umfasst, welcher über Kraftübertragungsmittel (48), insbesondere Riemen, weiter insbesondere Zahnriemen oder Keilriemen, oder Ketten mit dem ersten Kupplungsteil (40) zusammenwirkt.

15. Greifereinrichtung (10) nach einem der vorherigen Ansprüche, außerdem umfassend eine Steuereinrichtung zur Ansteuerung der Kopplungseinrichtung (34-1,34-2,34-3,34-4), insbesondere der Aktorik (76), und eine mit der Steuereinrichtung zusammenwirkende Erfassungseinrichtung zum Erfassen einer Form, insbesondere einer Außenfläche, eines zu greifenden Gegenstandes, wobei die Steuereinrichtung dazu ausgebildet ist, um in Abhängigkeit eines Signals der Erfassungseinrichtung die Kopplungseinrichtung (34-1,34-2,34-3,34-4), insb. die Aktorik (76), anzusteuern.
